# EUROPEAN PATENT SPECIFICATION

(11) **EP 2 078 658 B1**
(45) Date of publication and mention of the grant of the patent: **12.10.2016**
(21) Application number: 08022140.1
(22) Date of filing: 19.12.2008
(51) Int. Cl.: B61H 5/00, F16D 55/224

(54) **Disc brake**
Scheibenbremse
Frein à disque

(30) Priority: 09.01.2008 JP 2008001781
(43) Date of publication of application: 15.07.2009
(73) Proprietor: Akebono Brake Industry Co., Ltd., Tokyo 103-8534 (JP)
(72) Inventor: Yoshikawa, Kazuhiro, Chuo-ku Tokyo 103-8534 (JP); Murata, Yukio, Chuo-ku Tokyo 103-8534 (JP)
(74) Representative: Grünecker Patent- und Rechtsanwälte PartG mbB

(56) References cited:
- EP-A1- 0 121 601
- DE-A1- 4 041 455
- DE-U- 7 335 128
- JP-A- 2006 315 422
- US-A- 2 228 818
- US-A- 2 382 552

## Description

### BACKGROUND OF THE INVENTION

### <FIELD OF THE INVENTION>

The present invention relates to a disc brake for a vehicle, according to the preamble of claim 1. A generic disc brake is for instance known from JP 2006-315422 A.

The disc brake has one end portions of a pair of brake arms which are swung and pressed by an operation of an actuator provided on a side of a base body to cause brake pads respectively mounted on the other end portions of the brake arms to be pressed against a disc rotor. More specifically, the present invention relates to a brake torque receiver using a vibration isolating rubber of a disc brake which is capable of canceling the rotational moment generated in the brake arm owing to a convoluting operation of the brake pad during a braking operation.

### <BACKGROUND ART>

A further disc brake is for instance known from DE 73 35 128 U. Said document discloses a disc brake for railway vehicles with a special way of mounting a pull bow of a brake to the vehicle frame. Two rubber bushings facing each other are provided between the pull bow and the fastening bolt.

US 2 382 552 A also discloses a disc brake for railway vehicles. Said disc brake has pivotably mounted levers. A separate mounting bracket incorporates a pin to which the levers are mounted. EP 0 121 601A1 discloses a brake caliper for a disc brake comprising two brake levers that are pivotably mounted to a bridge by means of bearing pins.

In a disc brake apparatus used in a vehicle, particularly a disc brake for a railway vehicle (caliper brake for a railway vehicle), a relative movement between a sprung part where a brake is mounted and an unsprung part where a disc rotor is mounted is large, so that a mechanism capable of coping with it is required. As such mechanism, a lever-type brake based on a coupling of links capable of easily adapting to a large relative movement is generally known (refer to Jp-A-2006-315422).

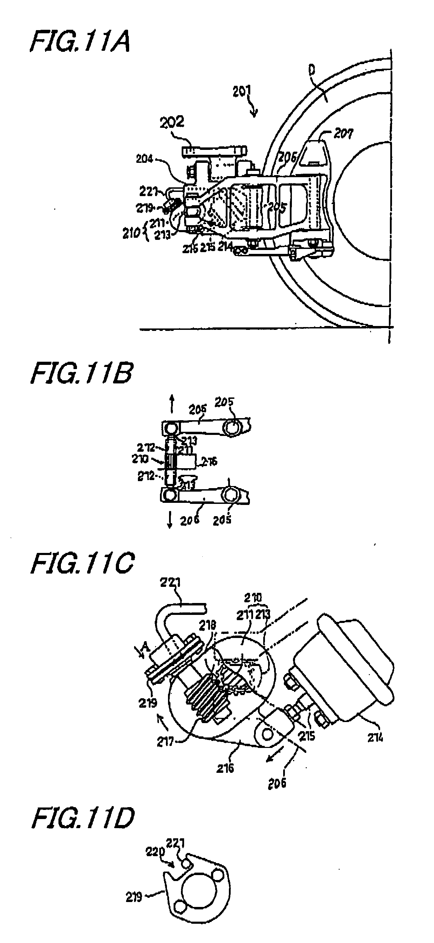

Referring to Figs. 11A to 11D, a brief description will be given to a configuration of the above-described conventional example. This railway disc brake apparatus (caliper brake for a railway vehicle) 201 has two caliper levers (brake arms) 206 on which brake heads 207 with brake pads respectively attached thereto for clampingly press a disc D are respectively mounted, and an actuator 214 having a movable rod 215 which is driven in at least one of an advancing direction and a retracting direction. Further, this disc brake apparatus 201 has a rotation transmitting arm 216 which is pivotally connected to the movable rod 215 and an extending/contracting shaft 210 which is engaged with this rotation transmitting arm 216. In this apparatus, a screw body 213 is pushed outward by a screw mechanism by a pushing-out rotation of the rotation transmitting arm 216 accompanying the advancing of the movable rod 215 of the actuator 214, whereby the brake arms 206 are respectively swung about a support pin 205 to cause the brake heads 207 with the brake pads respectively attached thereto to clampingly press the disc D, thereby effecting a braking operation. When the brake pad is worn, an end of a notched portion 220 of a cam plate 219 is brought into contact with a clearance adjustment rod 221 fixed to a base body owing to an excess stroke of the rotation transmitting arm 216, whereby a worm gear 217 is rotated to rotate a clearance adjustment gear 218, thereby effecting automatic clearance adjustment.

With the above-described conventional example, the advancing operation of the movable rod 215 is converted into an extending operation of the extending/contracting shaft 210 via the rotation transmitting arm 216, and its force is boosted and is transmitted to the caliper levers 206. Moreover, since the rotation transmitting arm 216 constituting a boosting/converting mechanism is provided with a clearance adjustment mechanism consisting of the camplate 219, the notched portion 220, the worm gear 217, the clearance adjustment gear 218, and the like, it is possible to provide a compact arrangement for a highly functional disc brake apparatus 201 capable of automatically adjusting the clearance between the disc D and the brake pad.

With the above-described conventional caliper brake for a railway vehicle, since relative displacement between the sprung part where the brake pad is mounted and the unsprung part where the disc is mounted is large, tilting can occur between the brake portion and the disk. If the tilting occurs between the brake portion and the disk, it leads to the dragging and wear of a lining (friction material). To cope with such a situation, in the conventional example shown in Figs. 11A to 11D, the arm 206 which receives the brake torque of the pad is fastened to a body 204 by the bolt, i.e., a fulcrum shaft, and follows the transverse movement of a wheel (in the direction of a crosstie). In addition, with respect to the rolling of the wheel, a measure is provided by hanging the entire body (suspended style) in the state of a pendulum by a bolt which engages the body 204 and a support 202. In the structure in which the entire body is thus swung to follow the wheel, it has been difficult to provide a lightweight design while taking the strength of the respective parts into consideration.

In view of the generic disc brake disclosed in JP 2006-315422 A, it is a problem that a rotational movement of the brake arm occurs when the brake pad is applied to the brake disc.

### SUMMARY OF THE INVENTION

In view of the aforesaid problem, it is an object of the present invention to suppress a rotational movement when the brake pad is applied to the brake disc. Therefore, the present invention provides a disc brake as defined in claim 1. Said disc brake is discriminated over the closest prior art with the features defined in the characterizing clause of claim 1. Further preferred embodiments are defined in the dependent claims 2 to 8.

One or more embodiments of the invention provide a brake torque receiving mechanism based on a two-point-support vibration isolating rubber which is capable of reliably canceling a moment generated in a brake arm due to a brake tangential force (brake pad convoluting action) produced on a brake pad side during a braking operation in a disc brake (caliper brake for a railway vehicle), thereby suppressing partial wear of the brake pad by virtue of the moment canceling action.

In addition, one or more embodiments of the invention provide a brake torque receiving mechanism in which, during the braking operation, the two-point-support vibration isolating rubber is capable of returning the brake pad to its original state by a resiliency (reaction force) of the vibration isolating material during releasing of the brake even if the tilting occurs between the brake pad and the disc rotor.

In accordance with one or more embodiments of the invention, a disc brake is provided with: a base body; a support pin attached to the base body; a brake arm swingably supported to the base body via the support pin, in which one end portion of the brake arm is pressed by an actuator to press a brake pad provided on the other end portion of the brake arm against a disc rotor; and a vibration isolating rubber provided between the support pin and the brake arm.

In the disc brake, the brake arm may be supported by the support pin at two points at both ends of the support pin, and the vibration isolating rubber may be provided on at least one point of the two points.

In the disc brake, the vibration isolating rubber may be configured by an inner member, an outer member, and a vibration proof rubber provided between the inner member and the outer member.

In the disc brake, the support pin may be attached to the base body via a tapered roller bearing.

In the disc brake, the vibration isolating rubber may include a flange at a portion corresponding to an outer side of the brake arm in a circumferential direction of the disc rotor.

In the disc brake, at least one of the inner member and the outer member of the vibration isolating rubber may include a flange at a portion corresponding an outer side of the brake arm in a circumferential direction of the disc rotor.

In the disc brake, the inner member may include rotation preventing means for engaging with a sleeve provided in the base body.

In the disc brake, the rotation preventing means may include one of a recessed portion and a protruding portion which is capable of being engaged with the other of the recessed portion and the protruding portion provided on the sleeve. A relative rotation between the inner member and the sleeve is prevented by an engagement of the recessed portion and the protruding portion.

According to one or more embodiments of the invention, since the supporting portion for supporting the brake arm to the base body is provided with a vibration isolating rubber which is capable of canceling the moment generated in the brake arm owing to the convoluting of the brake pad during the braking operation, it is possible to decrease the moment generated in the brake arm due to the brake tangential force (brake pad convoluting force).

In addition, when the brake arm is supported by the support pin at two points at both ends of the support pin and the vibration isolating rubber is provided on at least one point of the two points, since the vibration isolating rubber operates so as to act in the direction of canceling the rotation of the lever portion based on the tangential force of the pad, it is possible to prevent the partial wear of the pad.

In addition, when the tapered roller bearing is disposed on the mounting portion for mounting to the base body the support pin for supporting the brake arm, the tangential force of the pad can be reliably received by the tapered roller bearing portion.

In addition, when a flange is formed on at least one of the inner member, the outer member, and the vibration proof rubber on the outer side of the brake arm, the tangential force can be reliably received by the flange.

In addition, when the inner member of the vibration isolating rubber is provided with rotation preventing means for engaging with the sleeve disposed in the base body, it is possible to prevent the occurrence of relative displacement between the base body and the brake arm.

Furthermore, when the rotation preventing means is formed by protruding and recessed portions which are provided on both the inner member of the vibration isolating rubber and the sleeve disposed between the inner members, it is possible to ensure the integration of the inner member of the vibration isolating rubber and the sleeve.

By the use of the vibration isolating rubber, it is possible to minimize the deviation of the position of a fulcrum due to the deflection of the rubber during braking by virtue of the radial resiliency of the vibration isolating rubber.

In a case where a brake tangential force is applied to the lever portion (supporting portion), the brake tangential force can be received by the compressive force of the flange of the vibration isolating rubber.

In addition, as a combination of the inner member of the vibration isolating rubber and the sleeve is adopted, it is ensured that an axial force of a prescribed level or greater is not applied to the rubber sandwiched between the flanges when the bolt is tightened.

As described above, appropriate outstanding operational effects can be attained such as that by virtue of the action of the vibration isolating rubbers, even if tiling has occurred between the disc rotor and the brake during the braking operation, the brake pads can be returned to their original state during the releasing of the brakes.

Other aspects and advantages of the invention will be apparent from the following description, the drawings and the claims.

### BRIEF DESCRIPTION OF THE DRAWINGS

Fig. 1 is a front view of a disc brake in accordance with exemplary embodiments of the invention;
Fig. 2 is a side view of the disc brake;
Fig. 3 is a plan view of the disc brake;
Fig. 4 is a perspective view for explaining the operation of a brake arm;
Fig. 5 is an enlarged view of a support pin and its peripheral portions in accordance with a first exemplary embodiment of the invention for supporting a base body and the brake arm;
Fig. 6 is an enlarged view of the support pin its peripheral portions in accordance a second exemplary embodiment of the invention for supporting the base body and the brake arm;
Fig. 7 is a plan view of a vibration isolating rubber;
Fig. 8 is an enlarged view of the support pin and its peripheral portions in accordance with a third exemplary embodiment for supporting the base body 2 and the brake arm 1;
Fig. 9A is a plan view of a sleeve 11 which is disposed between the base body 2 and the support pin 3;
Fig. 9B is a cross-sectional view of the sleeve 11;
Fig. 9C is a plan view of the vibration isolating rubber 5 interposed between the brake arm 1 and the support pin 3;
Fig. 9D is a cross-sectional view of the vibration isolating rubber 5;
Fig. 10 is a perspective view illustrating the relationship of layout of the vibration isolating rubbers and the sleeves; and
Figs. 11A to 11D are explanatory diagrams of a conventional caliper brake for a railway vehicle.

### [Description of Reference Numerals and Signs]

- 1:: brake arm
- 2:: base body
- 3:: support pin
- 3:: flange
- 4:: pad holder
- 4a:: brake pad
- 5:: vibration isolating rubber
- 5a:: inner member
- 5b:: vibration proof rubber
- 5c:: outer member
- 6:: bushing
- 6a:: flange
- 7:: nut
- 8:: vibration-isolating-rubber retaining ring
- 9:: washer for a shaft
- 10:: tapered roller bearing
- 11:: sleeve
- 11a:: recessed portion
- 12:: low-friction bearing

### DETAILED DESCRIPTION OF THE EXEMPLARY EMBODIMENTS

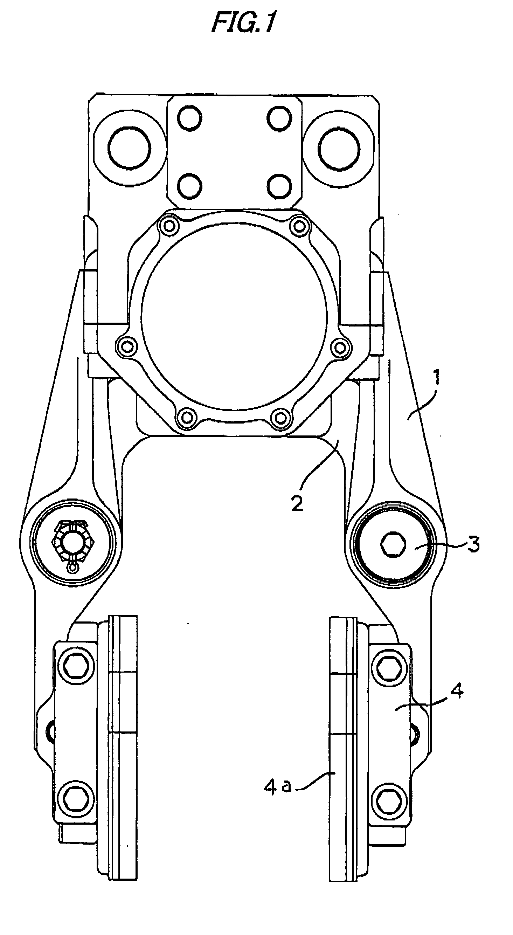

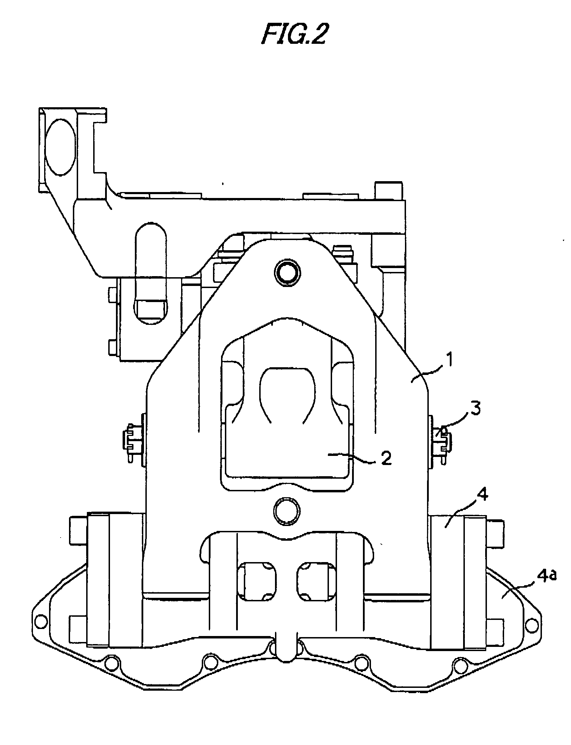

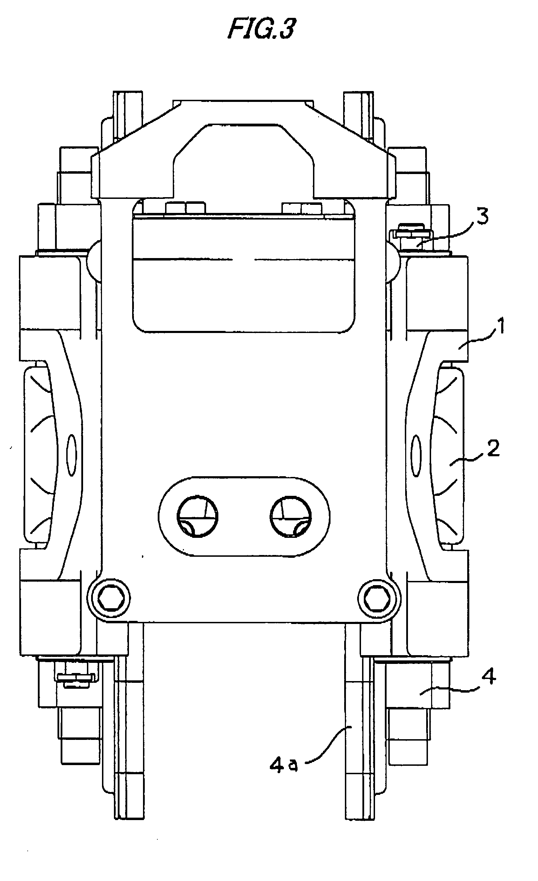

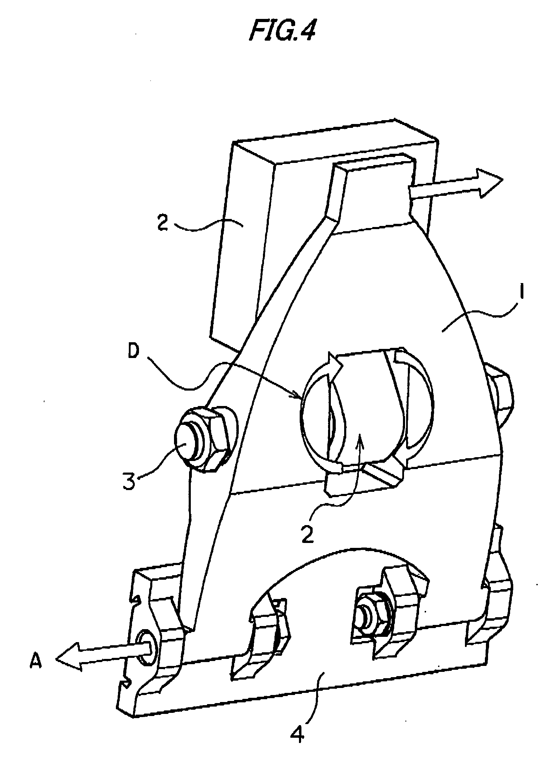

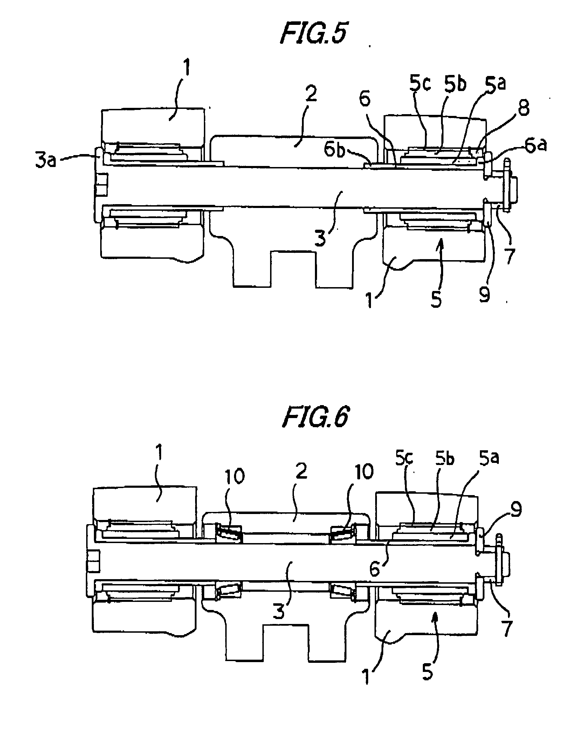

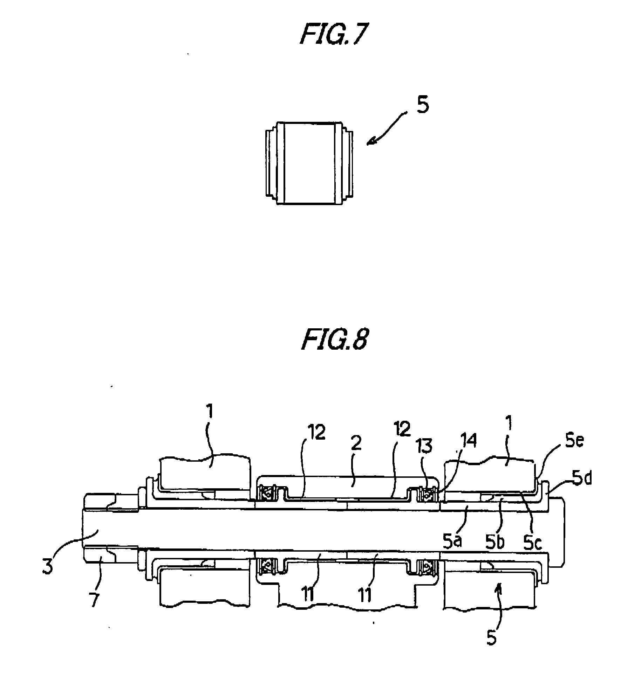

Hereafter, a description will be given of exemplary embodiments of a disc brake in accordance with the invention with reference to the drawings. Fig. 1 is a front view of the disc brake in accordance with the exemplary embodiments. Fig. 2 is a side view of the disc brake. Fig. 3 is a plan view of the disc brake. Fig. 4 is a perspective view for explaining the operation of a brake arm. Fig. 5 is an enlarged view of a support pin and its peripheral portions in accordance with a first exemplary embodiment for supporting a base body and the brake arm. Fig. 6 is an enlarged view of the support pin its peripheral portions in accordance a second exemplary embodiment for supporting the base body and the brake arm. Fig. 7 is a plan view of a vibration isolating rubber.

Referring to Figs. 1 to 3, a description will be given of a schematic configuration of the disc brake in accordance with the exemplary embodiments. The caliper brake has a pair of brake arms 1 respectively disposed in face-to-face relation to an unillustrated disc rotor. These brake arms 1 are each axially supported by a base body 2 of the caliper brake so as to be capable of swinging about a shaft (support pin) 3. A known brake pad 4a is attached to a lower end, as viewed in the drawing, of the brake arm 1 by means of a pad holder 4, and an unillustrated actuator for effecting the opening operation of the brake arm 1 is joined to an upper end, as viewed in the drawing, of the brake arm 1.

Referring to Fig. 5, a description will be given of the configuration of the support pin 3 and its peripheral portions in accordance with the first exemplary embodiment of the invention.

The brake arm 1 is axially supported to the base body 2 by means of the support pin 3, and two vibration isolating rubbers 5 are each interposed between the brake arm 1 and the support pin 3.

Specifically, the support pin 3 is press-fitted, passed through, and held in the base body 2, and the brake arm 1 is supported at two points, i.e., at both ends of the support pin 3 by means of the vibration isolating rubbers 5 which will be described later. A bushing 6 is fitted on the support pin 3, and each vibration isolating rubber 5 is interposed between that bushing 6 and the brake arm 1. The vibration isolating rubber 5 has a planar shape shown in Fig. 7 and is constructed with a vibration proof rubber 5b vulcanization-bonded between an inner member 5a and an outer member 5c both formed of a metal, as shown in Fig. 5. In addition, in Fig. 5, the bushing 6 is disposed at the aforementioned two-point supporting portion, a flange 6a is formed on this bushing 6, and a portion 6b of the bushing 6 is inserted in the base body 2. A flange 3a is also formed on one end side (left side in Fig. 5) of the support pin 3. The brake arm 1 is fitted to the support pin 3 by means of the bushing 6 and the vibration isolating rubber 5, and at this time the vibration isolating rubber 5 is mounted on the support pin 3 by press fitting and is fixed by a vibration-isolating-rubber retaining ring 8. If a nut 7 is tightened in this state, the brake arm 1 is supported to the base body 2 by each vibration isolating rubber 5 by virtue of the action of the flange 3a of the support pin 3 and the nut 7, and is supported so as to be capable of swinging and rotating (being twisted) by the resiliency of the rubber. It should be noted that in Fig. 5 reference numeral 9 denotes a washer for a shaft.

A description will be given of the operation of the disc brake constructed as described above.

In this disc brake, if the unillustrated actuator is operated, the brake arms 1 each move about the support pin 3 in the opening direction, and the brake pads 4a each provided at the lower end of the brake arm 1 concurrently press and clamp the disc rotor, thereby applying brakes.

In Fig. 4, when the brakes are applied, a brake tangential force is applied to each pad holder 4, which holds the brake pad, in a direction indicated at arrow A in Fig. 4, and this tangential force is also applied to the brake arm 1. The movement in the tangential direction of the brake arm 1 at this time is received by the shearing force of the vibration isolating rubbers 5 disposed at both ends of the support pin 3. Further, the brake tangential force generates a convoluting force in the brake pad 4a, and a rotational moment acts in the brake pad 4a owing to this convoluting action, and this rotational moment is also applied to the brake arm 1. However, this rotational moment of the brake arm 1 is absorbed and suppressed by the radial resiliency of the vibration isolating rubber 5, thereby making it possible to reliably prevent the partial wear of the brake pad 4a.

Next, referring to Fig. 6, a description will be given of the configuration of the support pin 3 and its peripheral portions in accordance with the second exemplary embodiment of the invention. The second exemplary embodiment differs from the first exemplary embodiment in that a pair of tapered roller bearings 10 are each provided between the base body 2 and the support pin 3, and the other arrangements of the second exemplary embodiment are similar to those of the first exemplary embodiment. Namely, the brake arm 1 is axially supported to the base body 2 by means of the support pin 3, and the two vibration isolating rubbers 5 are each interposed between the brake arm 1 and the support pin 3 in the same way as in the first exemplary embodiment. Further, in the same way as in the first exemplary embodiment the bushing 6 is fitted on the support pin 3, and each vibration isolating rubber 5 is press-fitted between that bushing 6 and the brake arm 1. The vibration isolating rubber 5 has a similar shape to that of the first exemplary embodiment, and the vibration isolating rubber 5 is constructed with the vibration proof rubber 5b vulcanization-bonded between the inner member 5a and the outer member 5c both formed of a metal. In this embodiment, the bushing 6 of the vibration isolating rubber 5 and an inner member of the tapered roller bearing 10 are disposed so as to be in contact with each other, and the brake tangential force is adapted to be imparted to the tapered roller bearings 10 by virtue of this configuration. In addition, the amount of movement of the supporting portion due to the tilting of the disc is absorbed by the radial elastic force of the vibration isolating rubbers 5. By disposing the tapered roller bearings 10 between the base body 2 and the support pin 3 as in this embodiment, the tangential force of the brake pad 4a can be reliably received by the tapered roller bearings 10. The configuration of Fig. 6 is characterized in that the support pin, i. e. , a fulcrum bolt, is axially rotatable so as to prevent the twisting of the vibration isolating rubber.

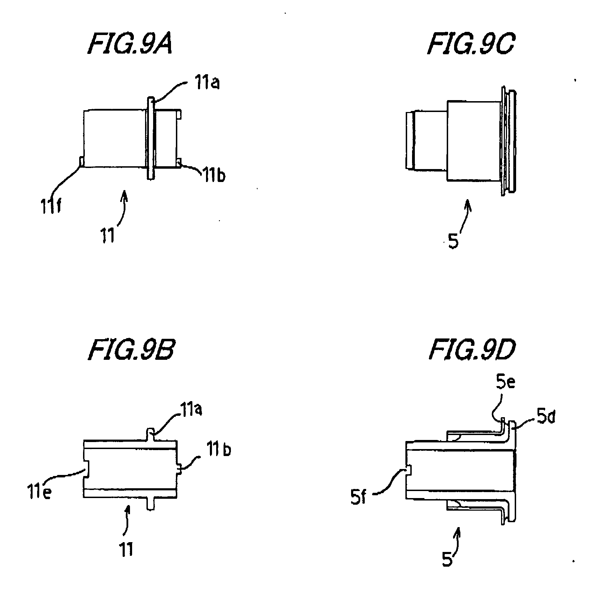

Furthermore, referring to Figs. 8 to 9D, a description will be given of the configuration of the support pin 3 and its peripheral portions in accordance with a third exemplary embodiment of the invention. Fig. 8 is an enlarged view of the support pin 3 and its peripheral portions in accordance with the third exemplary embodiment for supporting the base body 2 and the brake arm 1. Fig. 9A is a plan view of a sleeve 11 which is disposed between the base body 2 and the support pin 3; Fig. 9B is a cross-sectional view of the sleeve 11; Fig. 9C is a plan view of the vibration isolating rubber 5 interposed between the brake arm 1 and the support pin 3; and Fig. 9D is a cross-sectional view of the vibration isolating rubber 5. The third exemplary embodiment is characterized in that rotation preventing means are provided between the vibration isolating rubber 5 and the sleeve 11 disposed between the base body 2 and the support pin 3.

As shown in Fig. 8, in the vibration isolating rubber 5, flanges 5d and 5e for preventing the axial movement of the vibration isolating rubber 5 are respectively formed on the inner member 5a and the outer member 5c. It should be noted that the flange 5d or 5e may be provided on either one of the inner and outer members.

As shown in Fig. 9D, an appropriate number of recessed portions 5f which engage with the below-described sleeve 11 are formed in the inner member 5a of the vibration isolating rubber 5. Meanwhile, two sleeves 11 are each disposed between the support pin 3 and the base body 2. The sleeves 11 are respectively formed of a metallic material with flange parts, as shown in Fig. 9B. An appropriate number of protruding portions 11 b, which respectively fit in the recessed portions 5f formed on the inner member side of the vibration isolating rubber 5, are formed on the sleeve 11 at its portions which abut against the inner member side of the vibration isolating rubber 5, as shown in Fig. 9A, such that the recessed portions 5f formed on the inner member side and the protruding portions 11 b formed on the sleeve 11 are arranged to be fitted with each other to serve as the rotation preventing means. It should be noted that similar rotation preventing means 11e and 11f are also provided on mutually abutting portions of the two sleeves 11. In addition, a flow-friction bearing 12 of an oilless type is mounted on the outer side of the sleeve 11.

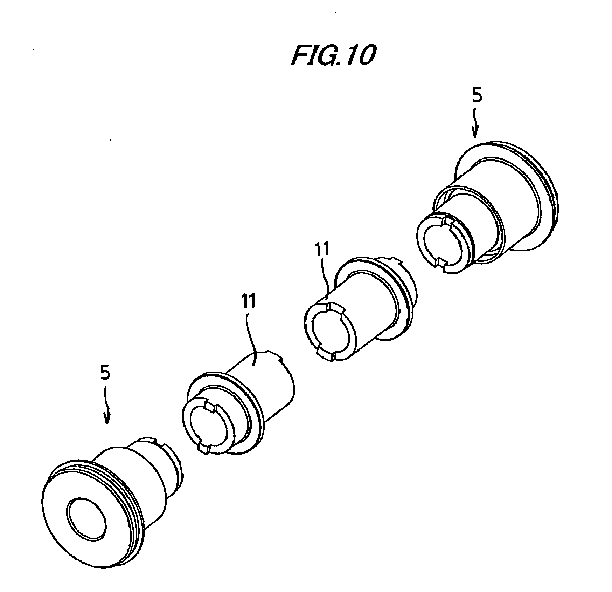

As shown in Fig. 8, the sleeves 11 are disposed between the base body 2 and the support pin 3, and the sleeves 11 are each fixed to the base body 2 side by a stop ring 14 via a seal 13. As the sleeves 11 are thus interposed between the base body 2 and the support pin 3, and each of these sleeves 11 and the inner member 5a of the vibration isolating rubber 5 are coupled to each other by the rotation preventing means, it is possible to prevent the twisting of the vibration isolating rubber 5 caused by the friction between the bolt and the bearing surface when the nut 7 is tightened up (see Fig. 10), and relative rotation between the brake arm 1 and the base body 2 is allowed. Furthermore, the tangential force of the pad 4a can be reliably received by the sleeves 11. In addition, in a case where the brake tangential force is applied to the brake arm supporting portions, the tangential force is transmitted to the sleeves 11 in the base body 2 via the vibration isolating rubbers 5. Since the tangential force transmitted to the sleeves 11 is also applied to the base body 2 via flanges 11 a of the sleeves 11, even in a case where the support pin 3 rotates while the brake tangential force is being applied thereto, it is possible to reduce the rotational resistance. It should be noted that as the rotation preventing arrangements formed on the vibration isolating rubber 5 and the sleeve 11, protruding portions may be formed on the inner member side and recessed portions may be formed in the sleeve side, or protruding portions and recessed portions may be formed alternately thereon. Further, it is possible to adopt various other shapes for preventing the relative rotation. Fig. 10 shows a perspective view illustrating the relationship of layout of the vibration isolating rubbers 5 and the sleeves 11.

Incidentally, in the above-described disc brake, during the braking operation, relative displacement occurs between the brake pad 4a side and the disc rotor side due to such forces as the brake tangential force, and it is important that the disc rotor and the brake pad 4a return to their original positions during the releasing of the brakes. If the brake pad 4a fails to return to its original position, the positional position between the two members deviates, and dragging and wear of the brake pad 4a can possibly occur. For this reason, in the invention, even if tilting occurs in the disc rotor during the braking operation, the disc rotor and the brake pads 4a return to their original positions during the releasing of the brakes.

More specifically, as the disc rotor tilts, the disc rotor is brought into contact with the brake pad 4a, and the brake pad 4a tends to be inclined by being pressed by the disc rotor. When tilting occurs in the disc rotor, the brake pad 4a follows the disc rotor while deflecting the vibration isolating rubber 5. When the brakes are released and the tilting of the disc rotor disappears, the brake arm 1, i.e., the brake pad 4a, returns to its original position (original posture) by virtue of the reaction force of the vibration isolating rubber 5, so that dragging, wear, breakage, and the like of the brake pad 4a can be prevented. Thus, by the adoption of the vibration isolating rubbers 5, even if tilting has occurred between the disc rotor and the brake during the braking operation, the brake pads 4a can be returned to their original state during the releasing of the brakes.

## Claims

1. A disc brake for a vehicle comprising:
a base body (2);
a support pin (3) attached to the base body (2); and
a brake arm (1) swingably supported to the base body (2) about the support pin (3), wherein one end portion of the brake arm (1) is pressed by an actuator to press a brake pad (4a) provided on the other end portion of the brake arm (1) against a disc rotor;
**characterized by**
a vibration isolating rubber part (5) provided between the support pin (3) and the brake arm (1).

2. The disc brake according to claim 1, wherein the brake arm (1) is supported by the support pin (3) at two points on both ends of the support pin (3), and
wherein the vibration isolating rubber part (5) is provided on at least one point of the two points.

3. The disc brake according to claim 1 or 2, wherein the vibration isolating rubber part (5) comprises an inner member (5a), an outer member (5c), and a vibration proof rubber (5b) provided between the inner member (5a) and the outer member (5c).

4. The disc brake according to any one of claims 1 to 3, wherein the support pin (3) is attached to the base body (2) via a tapered roller bearing (10).

5. The disc brake according to any one of claims 1 to 4, wherein the vibration isolating rubber part (5) includes a flange (5d, 5e) at a portion corresponding to an outer side of the brake arm (1) in a circumferential direction of the disc rotor.

6. The disc brake according to claim 3 or 4, wherein at least one of the inner member (5a) and the outer member (5c) of the vibration isolating rubber part (5) includes a flange (5d, 5e) at a portion corresponding an outer side of the brake arm (1) in a circumferential direction of the disc rotor.

7. The disc brake according to any one of claims 3 to 6, wherein the inner member (5a) includes rotation preventing means (5f) for engaging with a sleeve (11) provided in the base body.

8. The disc brake according to claim 7, wherein the rotation preventing means (5f) comprises one of a recessed portion (5f) and a protruding portion (11b) which is capable of being engaged with the other of the recessed portion (5f) and the protruding portion (11b) provided on the sleeve (11), wherein a relative rotation between the inner member (5a) and the sleeve (11) is prevented by an engagement of the recessed portion (5f) and the protruding portion (11 b).

## Patentansprüche

1. Eine Scheibenbremse für ein Fahrzeug, umfassend:
einen Grundkörper (2);
einen an dem Grundkörper (2) angebrachten Lagerstift (3); und
einen Bremsarm (1), welcher um den Lagerstift (3) schwenkbar an dem Grundkörper (2) angebracht ist,
wobei ein Endabschnitt des Bremsarms (1) durch ein Stellglied betätigt wird, um einen Bremsklotz (4a), welcher an dem anderen Endabschnitt des Bremsarms (1) vorgesehen ist, gegen einen Scheibenrotor zu drücken;
**charakterisiert durch**
ein vibrationsisolierendes Gummiteil (5), welches zwischen dem Lagerstift (3) und dem Bremsarm (1) vorgesehen ist.

2. Scheibenbremse nach Anspruch 1, wobei der Bremsarm (1) durch den Lagerstift (3) an zwei Punkten an beiden Enden des Lagerstiftes (3) abgestützt ist, und
wobei das vibrationsisolierende Gummiteil (5) an zumindest einem Punkt der beiden Punkte vorgesehen ist.

3. Scheibenbremse nach Anspruch 1 oder 2, wobei das vibrationsisolierende Gummiteil (5) ein inneres Element (5a), ein äußeres Element (5c) und ein vibrationsfestes Gummi (5b) zwischen dem inneren Element (5a) und dem äußeren Element (5c) enthält.

4. Scheibenbremse nach einem der Ansprüche 1 bis 3, wobei der Lagerstift (3) an dem Grundkörper (2) über ein Kegelrollenlager (10) befestigt ist.

5. Scheibenbremse nach einem der Ansprüche 1 bis 4, wobei das vibrationsisolierende Gummiteil (5) einen Flansch (5d, 5e) an einem Abschnitt aufweist, welcher einer Außenseite des Bremsarms (1) in Umfangsrichtung des Scheibenrotors entspricht.

6. Scheibenbremse nach Anspruch 3 oder 4, wobei mindestens eines des inneren Elements (5a) und des äußeren Elementes (5c) des vibrationsisolierenden Gummiteils (5) einen Flansch (5d, 5e) an einem Abschnitt aufweist, welcher einer Außenseite des Bremsarms (1) in Umfangsrichtung des Scheibenrotors entspricht.

7. Scheibenbremse nach einem der Ansprüche 3 bis 6, wobei das innere Element (5a) Rotationsverhinderungsmittel (5f) zum Eingriff mit einer Hülse (11) aufweist, welche in dem Grundkörper vorgesehen ist.

8. Scheibenbremse nach Anspruch 7, wobei das Rotationsverhinderungsmittel (5f) einen vertieften Abschnitt (5f) und einen vorstehenden Abschnitt (11 b) aufweist, welcher mit dem jeweils anderen von dem vertieften Abschnitt (5f) und dem vorstehenden Abschnitt (11 b) in Eingriff gebracht zu werden kann welcher an der Hülse (11) vorgesehen ist, wobei eine relative Drehung zwischen dem inneren Element (5a) und der Hülse (11) durch einen Eingriff des vertieften Abschnitts (5f) mit dem vorstehenden Abschnitt (11 b) verhindert wird.

## Revendications

1. Frein à disque pour un véhicule comprenant :
un corps de base (2) ;
une broche de support (3) fixée au corps de base (2) ; et
un bras de frein (1) supporté de manière oscillante sur le corps de base (2) autour de la broche de support (3), dans lequel une partie d'extrémité du bras de frein (1) est comprimée par un actionneur afin d'appuyer sur une plaquette de frein (4a) prévue sur l'autre partie d'extrémité du bras de frein (1) contre un rotor de disque ;
**caractérisé par** :
une partie en caoutchouc d'isolation contre les vibrations (5) prévue entre la broche de support (3) et le bras de frein (1).

2. Frein à disque selon la revendication 1, dans lequel le bras de frein (1) est supporté par la broche de support (3) au niveau de deux points sur deux extrémités de la broche de support (3), et
dans lequel la partie en caoutchouc d'isolation contre les vibrations (5) est prévue sur au moins un point des deux points.

3. Frein à disque selon la revendication 1 ou 2, dans lequel la partie en caoutchouc d'isolation contre les vibrations (5) comprenant un élément interne (5a), un élément externe (5c) et un caoutchouc anti-vibration (5b) prévu entre l'élément interne (5a) et l'élément externe (5c).

4. Frein à disque selon l'une quelconque des revendications 1 à 3, dans lequel la broche de support (3) est fixée sur le corps de base (2) via un roulement à rouleaux progressivement rétréci (10).

5. Frein à disque selon l'une quelconque des revendications 1 à 4, dans lequel la partie en caoutchouc d'isolation contre les vibrations (5) comprend une bride (5d, 5e) au niveau d'une partie correspondant à un côté externe du bras de frein (1) dans une direction circonférentielle du rotor de disque.

6. Frein à disque selon la revendication 3 ou 4, dans lequel l'un parmi l'élément interne (5a) et l'élément externe (5c) de la partie en caoutchouc d'isolation contre les vibrations (5) comprend une bride (5d, 5e) au niveau d'une partie correspondant à un côté externe du bras de frein (1) dans une direction circonférentielle du rotor de disque.

7. Frein à disque selon l'une quelconque des revendications 3 à 6, dans lequel l'élément interne (5a) comprend des moyens anti-rotation (5f) pour se mettre en prise avec un manchon (11) prévu dans le corps de base.

8. Frein à disque selon la revendication 7, dans lequel les moyens anti-rotation (5f) comprennent l'une parmi une partie enfoncée (5f) et une partie en saillie (11b) qui peut être mise en prise avec l'autre parmi la partie enfoncée (5f) et la partie en saillie (11b) prévue sur le manchon (11), dans lequel une rotation relative entre l'élément interne (5a) et le manchon (11) est empêchée par une mise en prise de la partie enfoncée (5f) et de la partie en saillie (11b).
